# EUROPEAN PATENT SPECIFICATION

(11) **EP 1 928 169 B1**
(45) Date of publication and mention of the grant of the patent: **24.03.2010**
(21) Application number: 07023279.8
(22) Date of filing: 30.11.2007
(51) Int. Cl.: H04N 5/44

(54) **Digital broadcasting signal receiving set and broadcasting signal receiving apparatus**
Empfangsset für digitale Rundfunksignale und Empfangsvorrichtung für Rundfunksignale
Ensemble de réception de signal de diffusion numérique et appareil de réception de signal de diffusion

(30) Priority: 01.12.2006 JP 2006325910
(43) Date of publication of application: 04.06.2008
(73) Proprietor: Funai Electric Co., Ltd., Daito-shi, Osaka 574-0013 (JP)
(72) Inventor: Miyagawa, Tatsuo, Osaka 574-0013 (JP)
(74) Representative: Grünecker, Kinkeldey, Stockmair & Schwanhäusser Anwaltssozietät

(56) References cited:
- EP-A- 1 215 897
- US-A1- 2004 212 736
- US-A1- 2004 252 238
- US-A1- 2006 115 241
- US-A1- 2006 158 555

## Description

The present invention relates to a digital broadcasting signal receiving set and a broadcast signal receiving apparatus.

### 2. Description of the Related Art

Television sets have conventionally been known which automatically change an aspect ratio (ratio of a horizontal dimension to a vertical dimension) of video according to the change of the channel for viewing and listening and display the video. Since an identification signal which shows an aspect ratio of video is written in a picture signal contained in a broadcast signal at intervals of a predetermined cycle (for example, one frame), the television set extracts the picture signal of the channel chosen as a candidate for viewing and listening from the broadcast signal, and decodes this picture signal, the television set can acquire the aspect ratio of the image concerning the channel of selection at a certain time. And the television set notifies the aspect ratio acquired in thismanner to a scaler, which performs an aspect ratio conversion of video, and changes the aspect ratio of the image displayed on the scaler on the screen of the television set, whereby the television set can display the image of the above chosen channel at an aspect ratio appropriate for the image.

Further, as a related technique, a television receiver is known which samples a predetermined position of a picture signal and judges what kind of image source the picture signal is. Based on this judgment result, the television receiver carries out an aspect conversion of the picture displayed on the television set picture tube so that the picture becomes an optimal picture according to that image source (refer to Japanese Unexamined Patent Application Publication No.H07-99615). Another television receiver that identifies an aspect ratio of an input picture signal on the basis of a pilot signal which is multiplexed to an input picture signal, and displays the input picture signal on a display screen in the state based on this identification result (refer to Japanese Unexamined Patent Application Publication No.H03-312728).

In addition, an electrical control unit is known in which various functions (including an aspect change function) which a television set has are set up in a favorite state beforehand by each operation unit, and the settings are memorized, and by a reproduction unit later, the memorized favorite state concerned is reproduced (refer to Japanese Unexamined Patent Application Publication No. H08-56313), and one where in a television receiving apparatus which can expand input signals of different aspect ratios to a wide aspect screen, the designation of display mode and magnifying power can be made by one key operation respectively (refer to Japanese Unexamined Patent Application Publication No.H05-91435).

In the notification technique of the aspect ratio to the scaler as described above, there has been a problem described below. That is, as mentioned above, the television set decodes the aspect ratio of a channel change destination and reads the identification signal cyclically written in this picture signal at a certain time, thereby acquiring the aspect ratio of the channel change destination.Therefore,after the channel ischanged,there is a time lag until the information of the aspect ratio of the channel change destination is notified to the aforesaid scaler. Therefore, in the short period after the channel change, the change of the aspect ratio by the scaler is behind the actual image output, and accordingly, there occurs an unsuitable phenomenon in which the image after the channel change is displayed at the aspect ratio before the channel change.

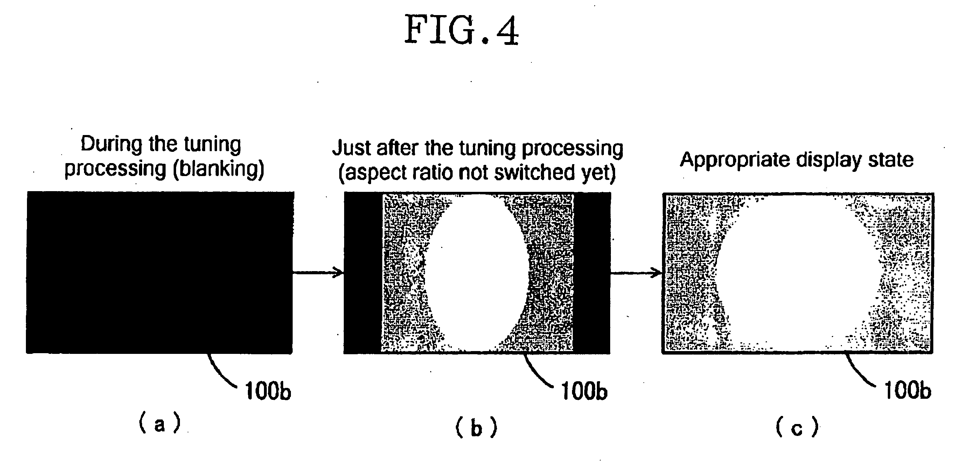

Such a phenomenon will be described concretely as shown in Figs. 4(a) to 4(c).

Figs. 4(a) to 4(c) show the change rate of the display in a screen 100b of a television set at the time of applying the conventional notification technique of the aspect ratio. In this figure, the screen 100b is supposed to have its ratio of the horizontal length to the vertical length 16:9. Moreover, in this figure, the aspect ratio of the image which is displayed before the channel change is 4:3, and the aspect ratio of the image displayed after the change is 16:9.

Fig. 4(a) shows the screen 100b under tuning processing immediately after the television set inputs an instruction to change the channel by operation of a user' s remote control devoice and the like. In the midst of changing the display, the television set is in tuning processing from the image of the channel chosen, to the image of the newly chosen channel, and the television set is displaying the blanking image (black screen display) on the screen 100b for convenience in the meantime.

Fig. 4(b) shows the moment when the above tuning processing is finished, and the picture signal of the channel change destination comes to be outputted to the screen 100b. At this moment, although the picture signal of the channel change destination is displayed on the screen 100b, since the aspect ratio corresponding to the picture signal of the channel change destination has not been notified to the scaler yet, the aspect ratio of the image is still 4:3 as before the channel change. As a result, the image which should be displayed at the aspect ratio of 16: 9 is displayed in a compressed state in the horizontal direction (transverse direction). That is, although the image has been changed according to the change of the channel, the above phenomenon that the aspect ratio is not yet changed occurs, and its user will be provided with a distorted image.

Fig. 4(c) shows the state where the aspect ratio corresponding to the picture signal of the channel change destination is notified to the scaler, and the aspect ratio became a suitable one of 16:9 as a result at the image of the change destination (appropriate display state).

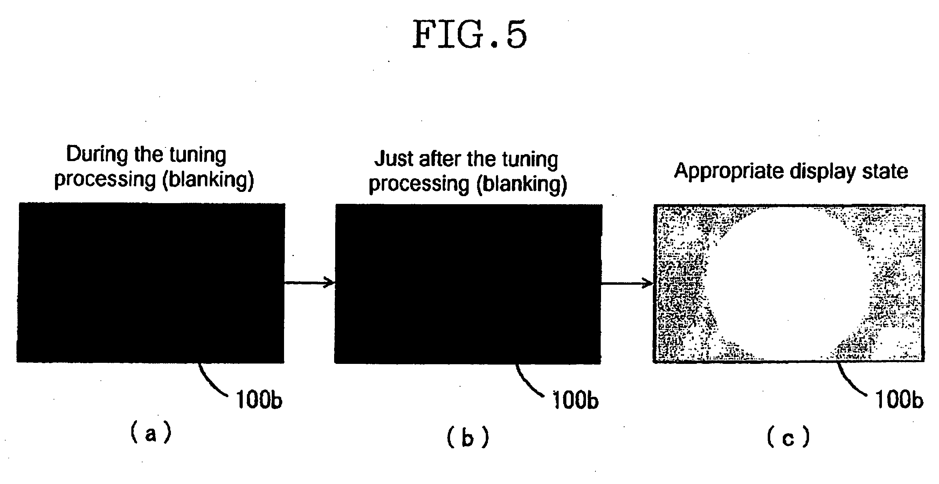

Moreover, Figs. 5(a) to 5(c) show an appearance of the screen 100b at the moment of continuing the blanking image display from the moment when the television set inputs the instruction to change the channel, to the moment when the aspect ratio corresponding to the picture signal of the channel change destination is notified to the scaler and the aspect ratio is changed appropriately. As shown in Fig. 5(b), since for the time corresponding to Fig. 4(b) also the television set displays the blanking image, a distorted image as shown in Fig. 4(b) can be hidden. On the other hand, however, since the blanking image period at the moment of the channel change becomes long, there is a problem of making a user unpleasant.

From US patent application US 2006/0158555 A1 a digital broadcast signal receiving apparatus is known that determines the aspect ratio of the currently received broadcast content by analysing the frequency of a predetermined region of the digital image. The determined aspect ratio is the stored to a memory means for later retrieval. In this manner, a repetition of the determination process can be avoided when the user returns to a previous channel. Nevertheless, when the user switches to a new channel, the broadcast content cannot be displayed with the correct aspect ratio unless the determination process is completed.

Thus, in the conventional art, since the hollowing nature of the change of the aspect ratio of the image at the moment when the user changes the channel for viewing and listening arbitrarily not quickly, unpleasant feeling has been given to the user. In addition, the above-mentioned documents are not enough to solve such a problem.

The present invention has been made in view of the above-described problem in the conventional art, and accordingly, an object of the present invention is to provide a digital broadcasting signal receiving apparatus according to claim 1 which can perform the change ot the aspect ratio of the image according to the change of the channel for viewing and listening quickly and without giving an unpleasant feeling to a viewer.

Namely, according to the present invention, when the channel is changed, the information on the aspect ratio is not taken out from the picture signal concerning the channel of the change destination and the information does not notify the same to the scaling unit, but the aspect ratio information corresponding to the program of the channel of the change destination is read out from the recording medium and is notified to the scaling unit simultaneously with the input of the aforesaid change instruction, and accordingly, the aspect ratio information is notified to the scaling means very quickly. Therefore, almost simultaneously with the input of the change instruction, the scaling unit can change the aspect ratio of an image according to the above aspect ratio information notified, and it is possible to prevent the phenomenon that the image after the channel change with the aspect ratio as before the channel change is displayed as in the conventional art.

The aforesaid recording unit is an information table contained in the broadcast signals received by the receiving unit, and acquires the aspect ratio information corresponding to each program for plural days from the table which describes the information about each program and may record this acquired aspect ratio information to the above recording medium.

In the broadcast signal, a table which describes the information about each program of each channel may be contained as data, and in the table, the aspect ratio information concerning each program for plural days may be described. Then, by performing beforehand the processing to acquire the aspect ratio information from the table concerned, when a broadcast signal is received, henceforth, the record means can offer the aspect ratio information quickly, when the demand of read-out is received from the notification means.

Only when the aspect ratio information corresponding to the program of the channel of the above change destination differs from the aspect ratio information corresponding to the program of the channel before the change, the above notification unit may notify the same to the scaling unit. For example, since the aspect ratio does not need to be changed when the aspect ratio of the program before the channel change is 4:3 and the aspect ratio of the channel of the change destination is 4:3 too, the above notification to the scaling unit is not performed. As a result, the notification work amount of the notification unit can be reduced.

It is possible to grasp a structure equipped with a control unit which performs processing to acquire each program of each channel for plural days fromEIT contained in the received digital broadcasting signal, and records the acquired aspect ratio information concerned to a predetermined recording medium for every predetermined period. When the change instruction of the channel is input, the control unit reads the aspect ratio information corresponding to the program of the channel of the change destination by the change instruction concerned from the above recording medium, and notifies the read aspect ratio information concerned to the scaling unit.

That is, the same action and same effect as each of the above broadcast signal receiving apparatus can be attained too with a concrete product of a digital broadcasting signal receiving apparatus. Of course, it is also possible to grasp an invention of a program which makes a computer perform the processing which each means of each above broadcast signal receiving apparatus and each section of the digital broadcasting signal receiving apparatus perform.
Fig. 1 is a block diagram showing the outline structure of a digital the television set.
Fig. 2 is the flow chart showing the contents of notification processing.
Fig. 3 is a figure showing the change rate of the image display accompanying the channel change in the present invention.
Figs. 4(a) to 4(c) are figures showing the change rate of the image display accompanying the channel change in the conventional art.
Figs. 5(a) to 5(c) are figures showing the change rate of the image display accompanying the channel change in the conventional art.

Hereafter, a preferred embodiment according to the present invention will be described with reference to the attached drawings.

### Judgment Unit in Preferred Embodiment

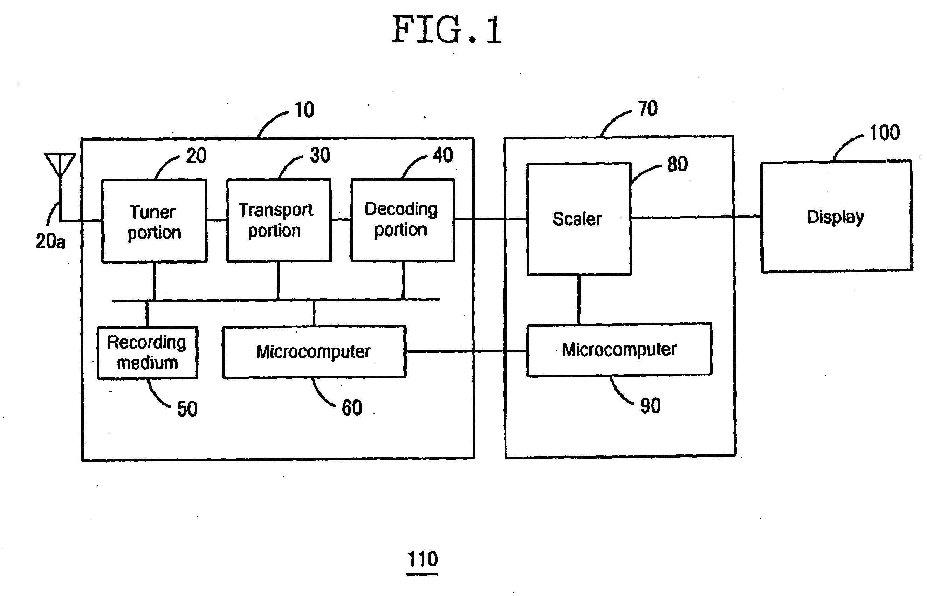

Hereinafter, a preferred embodiment according to the present invention will be described. Fig. 1 shows an outline structure of a digital television set (digital broadcasting signal receiving apparatus) 110 as a digital broadcasting signal receiving apparatus in a block diagram.

The digital television set (hereafter referred to as TV) 110 roughly includes a decoding module 10, a scaling module (scaling unit) 70, and a display (display unit) 100 that performs a predetermined image display on a screen.

First, the fundamental flow from the receiving of the digital television set broadcasting signal to the display of an image by the TV 110 will be described.

The decoding module 10 is equipped with an antenna 20a, a tuner (receiving unit) 20, a transport unit 30, a decoding unit 40, a recording medium 50, and a microcomputer 60. The microcomputer 60 comprises a CPU and a ROM and a RAM, and connects with each of the antenna 20a, the tuner 20, the transport unit 30, the decoding unit 40, and the recording medium 50, and controls each unit. The antenna 20a receives a digital television set broadcasting signal, and outputs this broadcast signal to the tuner 20. The tuner 20 carries out frequency conversion of the broadcast signal to an intermediate frequency signal, and also converts the intermediate frequency signal as an analog signal into a digital signal, and extracts a transport stream (TS) from the digital signal.

The tuner 20 sends out the TS to the transport unit 30. The transport unit 30 is equipped inside with a descrambling unit and a demultiplex unit, and performs processing to cancel the scramble of the TS by the descrambling unit. The TS whose scramble is canceled consists of plural transport packets, and picture signals, audio signals, and various data are stored in each transport packet. Then, a demultiplex unit extracts the picture signals and audio signals corresponding to the channel designated by the microcomputer 60 from the TS on the basis of PID (packet ID) . The picture signals and audio signals which are extracted from the TS are still in the state where these signals are encoded according to the MPEG standard (encoding). The transport unit 30 outputs the picture signals and the audio signals to the decoding unit 40. The decoding unit 40 decodes the picture signals and the audio signals according to the MPEG standard.

The decodedpicture signals are output to the scaling module 70. In the scaling module 70, a scaler 80 performs processing to adjust an aspect ratio of an image on the basis of the instruction by the microcomputer 90. The scaler 80 can convert the aspect ratio of an image by elongating and compressing the picture which the input picture signals show horizontally and vertically. From the scaler 80, the picture signals after the adjustment of the aspect ratio are output to a display 100. And, as a result, an image based on the picture signals is displayed on a screen 100a of the display 100. As the display 100, it is possible to use various displays, such as a liquid crystal display and plasma display unit and the like.

In addition, the audio signals decoded as the above are supplied to an audio signal D/A conversion unit which is not illustrated and are converted into analog audio signals, and are supplied to a loud speaker (not illustrated) with which the display 100 is equipped, and, as a result, the signals are output as sounds from the loud speaker.

The microcomputer 60 can detect various instruction signals input from operation keys arranged in the surface of the TV 110 main portion and a remote control device (neither illustrated), and the change of the channel for viewing and listening also is recognized on the basis of such instruction signals.

Next, the record processing of the aspect ratio information in the present preferred embodiment will be described hereinafter.

To the TS transferred by the digital television set broadcasting signals, besides the picture signals and the audio signals, various other data are multiplexed, and as a type of multiplexed data, data called program arrangement information (SI : Service Information) is contained. Moreover, there is an information table called EIT (Event Information Table) as a type of SI, and table data exists therein. To the EIT, information including the title and the contents and the like of broadcast time of each program of each channel, and the aspect ratio, the image quality about each program is described. Usually, the information about each program for about one week onward is described in the EIT.

In the preferred embodiment, by use of the aforesaid EIT, the information on the aspect ratio about each program of each channel for plural days (aspect ratio information) is acquired beforehand. In concrete, in the TV 110, in parallel with the aforesaid processing from the receiving of the usual digital television set broadcasting signals to the image display, the microcomputer 60 performs the processing to read aspect ratio information about each program of each channel from the specific bit of EIT contained in the TS concerned and record the read aspect ratio information to the recording medium 50 periodically (for every predetermined period) . This record processing is performed at frequency, for example, once in a week.

As a result, the aspect ratio information about each program of each channel for one week is always saved in the recording medium 50. Therefore, the microcomputer 60 and the recording medium 50a constitute the record means.

Next, the notification processing of the aspect ratio information in the preferred embodiment will be described hereinafter.

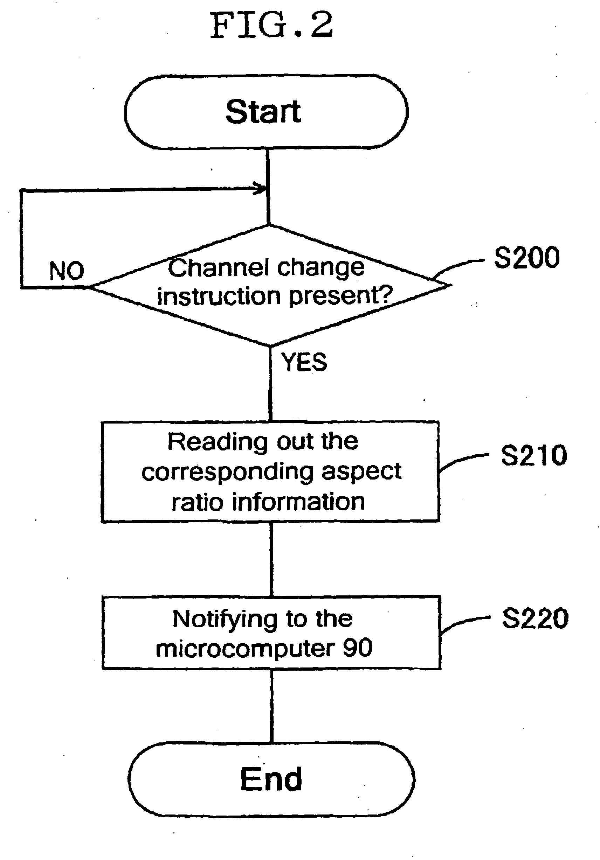

Fig. 2 shows the notification processing of the aspect ratio information which the microcomputer 60 performs in a flow chart. In addition, such processing of the microcomputer 60 constitutes the notification means.

At step S200 (the word, "step" will hereinafter be eliminated), the microcomputer 60 judges whether the change instruction signal to instruct the change of the channel from the operation keys or the remote control unit has been input or not. When having detected the input of the change instruction signal, the microcomputer 60 progresses to the processes of S210 and after.

At S210, the microcomputer 60 reads out the aspect ratio information about the program concerning the channel of the change destination which the change instruction signal instructs, and the program at the time when the change instruction signal concerned is input from the recording medium 50.

At S220, the microcomputer 60 notifies the read aspect ratio information to the microcomputer 90 of the scaling module 70. The notification of the aspect ratio information from the microcomputer 60 to the microcomputer 90 is performed by use of a circuit for UART communications in the preferred embodiment.

When the notification of the aspect ratio information is received at the side of the scaling module 70, the microcomputer 90 instructs the scaler 80 to adjust the aspect ratio according to this aspect ratio information. The scaler 80 adjusts the aspect ratio of the picture signals output from the decoding portion 40 according to the aspect ratio information instructed by the microcomputer 90, and outputs the same to the display 100. The picture signals output to the scaler 80 from the decoding unit 40 in this scene of course correspond to the channel of the change destination instructed by the above change instruction signal. The microcomputer 60 and the microcomputer 90 constitute the control unit in this meaning.

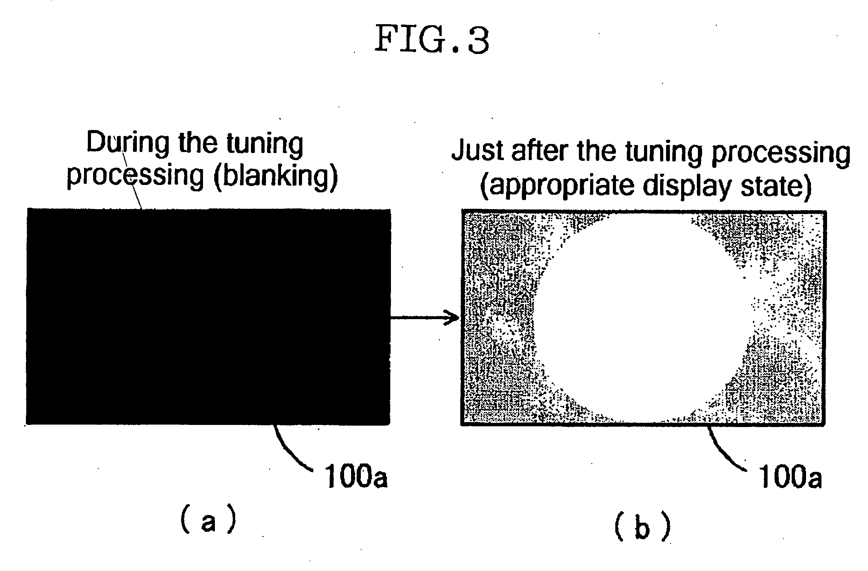

Fig. 3 shows the state of the image display change in the display 100 at the moment of performing the above notification processing according to the present invention changes.

Also in this figure too, in the same manner as in Figs. 4 and 5, it is supposed that the ratio of the horizontal dimension to the vertical dimension of the screen 100a of the display 100 is 16:9, and the aspect ratio of the image which is displayed before the channel change is 4:3, and the aspect ratio of the image which is displayed after the change is 16:9.

Fig. 3(a) shows a screen (blanking image) under the tuning processing immediately after the change instruction signal is input by operation of its user's through the above operation keys and the remote control unit in the same manner as in Fig. 4(a) and Fig. 5(a).

Fig. 3(b) shows the screen at the moment when the aforesaid tuning processing is finished and the picture signals corresponding to the channel of the aforesaid change destination comes to be output from the scaler 80 to the display 100. As shown in this figure, after the end of the tuning processing, the image corresponding to the channel of the change destination is displayed at the aspect ratio (16:9) corresponding to the image from the start, and such a distorted image as shown in Fig. 4(b) is not displayed. Moreover, since the distorted image shown in Fig. 4(b) does not appear, it is not necessary to lengthen the blanking image period as shown in Fig. 5 in order to hide this.

As described above, according to the present invention, the TV 110 extracts the aspect ratio information about each program of each channel which is overlapped on the digital television set broadcasting signals from the digital the television set broadcasting signals periodically, and records the same to the recording medium 50, and on the other hand, when the instruction of the change of the channel is input from the outside, the TV 110 immediately reads out the aspect ratio information corresponding to the program of the channel of the change destination by the instruction concerned from the recording medium 50, and the TV 110 notifies the same to the microcomputer 90 which controls the scaler 80. Therefore, in comparison with the conventional technique where such picture signals concerning the channel of the change destination are extracted from the TS after the input of the instruction of the aforesaid change, and the identification signal of the aspect ratio periodically described in the extracted picture signals is acquired, and this acquired identification signal is notified to the microcomputer 90 which controls the scaler 80, it is possible to greatly shorten the time required in order to notify the aspect ratio information to the scaler 80.

Therefore, when an image is changed by the channel change, the aspect ratio thereof also turns into the aspect ratio corresponding to the image of the change destination at the same time as the image changes. And the phenomenon where the image after the channel change is displayed at the aspect ratio before the channel change and a distorted display which has been seen conventionally does not occur. Moreover, it is not necessary to secure the blanking image period for a long time in order to hide a distorted display, therefore, the user can perform a very quick and comfortable channel change.

Meanwhile, in the above description of Fig. 2, when reading the aspect ratio information from the recording medium 50, the microcomputer 60 notifies the read information to the microcomputer 90, instead, a process to judge whether the read aspect ratio information differs from the aspect ratio information notified to the microcomputer 90 at the moment of the last notification may be arranged between S210 and S220. When this process of judgment is put in, at S220, only when it is judged that the read aspect ratio information differs in the above process at S220, the aspect ratio information read from the recording medium 50 at S210 is notified to the microcomputer 90. That is, if the aspect ratio of an image does not change before and after the change of the channel, it is not necessary to notify the aspect ratio information to the scaler 80 fully. Moreover, by inserting the aforesaid process of judgment, it is possible to reduce the quantity of the communication processing performed from the microcomputer 60 to the microcomputer 90.

While the invention has been particularly shown and described with respect to preferred embodiments thereof, it should be understood by those skilled in the art that the foregoing and other changes in form and detail may be made therein without departing from the scope of the invention as defined in the appended claims.

## Claims

1. A digital broadcast audio/video signal receiving apparatus comprising
a processing unit (60) ;
a receiving unit (20) which receives broadcast audio/video signals;
a recording medium (50);
an extraction unit (30, 40) which extracts picture signals from the received broadcast signals; and
a display unit (100) comprising a screen ; and
a scaling unit (80) which adjusts the aspect ratio of images identified by said picture signals and being displayed on said screen on the basis of received aspect ratio information associated with said images,
wherein
said processing unit (60) is adapted
for demultiplexing service information from the received broadcast signal, said service information comprising aspect ratio information for each program of each channel for plural days,
for recording said aspect ratio information for each program of each channel for plural days on said recording medium (50),
for reading, when an instruction to change from a current channel to a new channel is input, aspect ratio information corresponding to a program currently broadcast on the new channel from the recording medium (50), and
for transmitting the read aspect ratio information to the scaling unit (80).

2. The apparatus according to claim 1, wherein the processing unit (60) is further adapted for acquiring the aspect ratio information for each program of each channel for plural days from an event information table which is part of the received broadcast signals and indicates program information of each program.

3. The apparatus according to claim 1 or 2, wherein the processing unit (60) transmits the read aspect ratio information only if the read aspect ratio information differs from an aspect ratio information corresponding to a program currently broadcast on the current channel.

4. The apparatus according to any of claims 1 to 3, wherein the scaling unit (80) converts an aspect ratio of said images by elongating and compressing said images horizontally and vertically.

5. The apparatus according to any of claims 1 to 4, further comprising a tuner (20) which carries out frequency conversion of the broadcast signal to an intermediate frequency signal, converts the intermediate frequency signal as an analog signal into a digital signal, and extracts a transport stream from the digital signal, wherein the aspect ratio information for each program of each channel is acquired from an event information table in program arrangement information contained in the transport stream.

6. The apparatus according to claim 5, wherein the aspect ratio information for each program of each channel corresponds to a specific bit of the event information table.

7. The apparatus according to any of claims 1 to 6, wherein the processing unit (60) is further adapted for detecting instruction signals input from operation keys or a remote control device, said instruction signals indicating the instruction to change from a current channel to a new channel.

8. The apparatus according to any of claims 1 to 7, comprising a decoding module (10), a scaling module (70), and a display unit (100), wherein the decoding module (10) acquires the aspect ratio information and notifies the aspect ratio information to the scaling module (70), and the aspect ratio is adjusted according to the aspect ratio information notified by the scaling module (70).

## Patentansprüche

1. Empfangsvorrichtung für digitale Rundfunk-Audio-/Video-Signale, die umfasst:
eine Verarbeitungseinheit (60);
eine Empfangseinheit (20), die Rundfunk-Audio-/Video-Signale empfängt;
ein Aufzeichnungsmedium (50);
eine Extrahiereinheit (30, 40), die Bildsignale aus den empfangenen Rundfunksignalen extrahiert; und
eine Anzeigeeinheit (100), die einen Bildschirm umfasst; und
eine Skaliereinheit (80), die das mit den Bildern zusammenhängende Seitenverhältnis der Bilder, die durch die Bildsignale **gekennzeichnet** und auf dem Bildschirm angezeigt werden, auf Basis empfangener Seitenverhältnis-Informationen anpasst;
wobei
die Verarbeitungseinheit so eingerichtet ist, dass sie
Dienstinformationen aus dem empfangenen Rundfunksignal demultiplexiert, wobei die Dienstinformationen Seitenverhältnisinformationen für jede Sendung jedes Kanals für mehrere Tage umfassen,
die Seitenverhältnisinformationen für jede Sendung jedes Kanals für mehrere Tage auf dem Aufzeichnungsmedium (50) aufzeichnet,
wenn ein Befehl zum Wechseln von einem aktuellen Kanal zu einem neuen Kanal eingegeben wird, Seitenverhältnisinformationen, die einer Sendung entsprechen, die aktuell auf dem neuen Kanal gesendet wird, von dem Aufzeichnungsmedium (50) liest, und
die gelesenen Seitenverhältnisinformationen zu der Skaliereinheit (80) überträgt.

2. Vorrichtung nach Anspruch 1, wobei die Verarbeitungseinheit (60) des Weiteren so eingerichtet ist, dass sie die Seitenverhältnisinformationen für jede Sendung jedes Kanals für mehrere Tage aus einer Ereignisinformationstabelle bezieht, die Teil der empfangenen Rundfunksignale ist und Sendungsinformationen für jede Sendung angibt.

3. Vorrichtung nach Anspruch 1 oder 2, wobei die Verarbeitungseinheit (60) die gelesenen Seitenverhältnisinformationen nur dann überträgt, wenn sich die gelesenen Seitenverhältnisinformationen von einer Seitenverhältnisinformation unterscheiden, die einer Sendung entspricht, die aktuell auf dem aktuellen Kanal gesendet wird.

4. Vorrichtung nach einem der Ansprüche 1 bis 3, wobei die Skaliereinheit (80) ein Seitenverhältnis der Bilder umwandelt, indem sie die Bilder horizontal und vertikal streckt und staucht.

5. Vorrichtung nach einem der Ansprüche 1 bis 4, die des Weiteren einen Tuner (20) umfasst, der Frequenzumwandlung des Rundfunksignals in ein Zwischenfrequenzsignal ausführt, das Zwischenfrequenzsignal als ein analoges Signal in ein digitales Signal umwandelt und einen Transportstrom aus dem digitalen Signal extrahiert, wobei die Seitenverhältnisinformationen für jede Sendung jedes Kanals aus einer Ereignisinformationstabelle in Sendungsanordnungsinformationen bezogen werden, die in dem Transportstrom enthalten sind.

6. Vorrichtung nach Anspruch 5, wobei die Seitenverhältnisinformationen für jede Sendung jedes Kanals einem spezifischen Bit der Ereignisinformationstabelle entsprechen.

7. Vorrichtung nach einem der Ansprüche 1 bis 6, wobei die Verarbeitungseinheit (60) des Weiteren so eingerichtet ist, dass sie Befehlssignale erfasst, die über Betätigungstasten oder eine Fernbedienungseinrichtung eingegeben werden, wobei die Befehlssignale den Befehl zum Wechseln von einem aktuellen Kanal zu einem neuen Kanal anzeigen.

8. Vorrichtung nach einem der Ansprüche 1 bis 7, die ein Dekodiermodul (10), ein Skaliermodul (70) und eine Anzeigeeinheit (100) umfasst, wobei das Dekodiermodul (10) die Seitenverhältnisinformationen bezieht, die Seitenverhältnisinformationen dem Skaliermodul (70) mitteilt, und das Seitenverhältnis entsprechend den durch das Skaliermodul (70) mitgeteilten Seitenverhältnisinformationen angepasst wird.

## Revendications

1. Appareil de réception de signal audio/vidéo de radiodiffusion numérique comprenant
une unité de traitement (60) ;
une unité de réception (20) qui reçoit les signaux audio/vidéo de radiodiffusion ;
un support d'enregistrement (50) ;
une unité d'extraction (30, 40) qui extrait des signaux d'image des signaux de radiodiffusion reçus ; et
une unité d'affichage (100) comprenant un écran ; et
une unité de mise à l'échelle (80) qui ajuste le rapport de côté d'images identifiées par lesdits signaux d'image et affichées sur ledit écran en se basant sur des informations de rapport de côté reçues associées auxdites images,
où
ladite unité de traitement (60) est adaptée
pour démultiplexer des informations de service provenant du signal de radiodiffusion reçu, lesdites informations de service comprenant des informations de rapport de côté pour chaque programme de chaque canal pendant plusieurs jours,
pour enregistrer lesdites informations de rapport de côté pour chaque programme de chaque canal pendant plusieurs jours sur ledit support d'enregistrement (50),
pour lire, lorsqu'une instruction donnant l'ordre de passer d'un canal actuel à un nouveau canal est entrée, des informations de rapport de côté correspondant à un programme actuellement radiodiffusé sur le nouveau canal à partir du support d'enregistrement (50), et
pour transmettre les informations de rapport de côté lues à l'unité de mise à l'échelle (80).

2. Appareil selon la revendication 1, dans lequel l'unité de traitement (60) est en outre adaptée pour acquérir les informations de rapport de côté pour chaque programme de chaque canal pendant plusieurs jours à partir d'une table d'informations d'événement qui fait partie des signaux de radiodiffusion reçus et indique des informations de programme de chaque programme.

3. Appareil selon la revendication 1 ou 2, dans lequel l'unité de traitement (60) transmet les informations de rapport de côté lues seulement si les informations de rapport de côté lues diffèrent d'une information de rapport de côté correspondant à un programme actuellement radiodiffusé sur le canal actuel.

4. Appareil selon l'une quelconque des revendications 1 à 3, dans lequel l'unité de mise à l'échelle (80) convertit un rapport de côté desdites images en allongeant et compressant lesdites images horizontalement et verticalement.

5. Appareil selon l'une quelconque des revendications 1 à 4, comprenant en outre un syntoniseur (20) qui réalise une conversion de fréquence du signal de radiodiffusion en un signal de fréquence intermédiaire, convertit le signal de fréquence intermédiaire sous forme de signal analogique en un signal numérique, et extrait un flux de transport du signal numérique, où les informations de rapport de côté pour chaque programme de chaque canal sont acquises depuis la table d'informations d'événement dans des informations d'agencement de programme contenues dans le flux de transport.

6. Appareil selon la revendication 5, dans lequel les informations de rapport de côté pour chaque programme de chaque canal correspondent à un bit spécifique de la table d'informations d'événement.

7. Appareil selon l'une quelconque des revendications 1 à 6, dans lequel l'unité de traitement (60) est en outre adaptée pour détecter des signaux d'instruction entrés depuis des touches de fonction ou un dispositif de télécommande, lesdits signaux d'instruction indiquant l'instruction ordonnant de passer d'un canal actuel à un nouveau canal.

8. Appareil selon l'une quelconque des revendications 1 à 7, comprenant un module de décodage (10), un module de mise à l'échelle (70), et une unité d'affichage (100), où le module de décodage (10) acquiert les informations de rapport de côté et indique les informations de rapport de côté au module de mise à l'échelle (70), et le rapport de côté est ajusté selon les informations de rapport de côté indiquées par le module de mise à l'échelle (70).
